(19) Europäisches Patentamt
European Patent Office
Office européen des brevets

(11) **EP 4 006 786 A1**

(12) **DEMANDE DE BREVET EUROPEEN**

(43) Date de publication:
**01.06.2022 Bulletin 2022/22**

(21) Numéro de dépôt: **21210823.7**

(22) Date de dépôt: **26.11.2021**

(51) Classification Internationale des Brevets (IPC):
***G06N 3/08*** *(2006.01)*

(52) Classification Coopérative des Brevets (CPC):
**G06N 3/084**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **27.11.2020 FR 2012286**

(71) Demandeur: **Commissariat à l'énergie atomique et aux énergies alternatives 75015 Paris (FR)**

(72) Inventeurs:
• **BOUNIOT, Quentin**
**91191 GIF-SUR-YVETTE CEDEX (FR)**
• **AUDIGIER, Romaric**
**91191 GIF-SUR-YVETTE CEDEX (FR)**
• **LOESCH, Angélique**
**91191 GIF-SUR-YVETTE CEDEX (FR)**

(74) Mandataire: **Brevalex**
**56, Boulevard de l'Embouchure**
**B.P. 27519**
**31075 Toulouse Cedex 2 (FR)**

(54) **MÉTHODE D'APPRENTISSAGE D'UN RÉSEAU DE NEURONES POUR LE RENDRE ROBUSTE AUX ATTAQUES PAR EXEMPLES CONTRADICTOIRES**

(57) La présente invention concerne une méthode d'apprentissage d'un réseau de neurones pour le rendre robuste aux attaques par exemples contradictoires. Le réseau de neurones est entraîné sur un ensemble d'exemples contradictoires générés au moyen d'une attaque sur des exemples intègres. L'apprentissage utilise une fonction de perte régularisée comprenant un premier terme fonction de l'écart entre la prédiction fournie par le réseau de neurones à partir d'exemples contradictoires et les labels des exemples intègres correspondants, ainsi qu'un second terme de pénalisation, proportionnel à la divergence de Sinkhorn entre la distribution des exemples contradictoires et celle des exemples intègres correspondants.

FIG.3

**Description**

**DOMAINE TECHNIQUE**

La présente invention concerne de manière générale le domaine de l'apprentissage automatique et plus particulièrement celui des réseaux de neurones artificiels. Elle vise à accroître la robustesse d'un tel réseau de neurones vis-à-vis d'attaques par exemples contradictoires, également appelés antagonistes ou adversaires (*adversarial examples*).

**ÉTAT DE LA TECHNIQUE ANTÉRIEURE**

Les réseaux de neurones artificiels sont utilisés dans un très grand nombre de systèmes d'intelligence artificielle. Après une phase d'apprentissage (ou d'entrainement), un réseau de neurones est capable d'effectuer, dans une phase opérationnelle, des opérations de régression, de classification, d'extraction de vecteurs caractéristiques (*features*), d'encodage, de calcul de métriques, etc., de manière connue en soi.

L'entrainement d'un réseau de neurones est généralement effectué de manière supervisée à partir d'un ensemble de données d'apprentissage (*training data set*) grâce à un algorithme dit de rétropropagation du gradient. Une description détaillée de cet algorithme pourra être trouvée notamment au chapitre 3.2 de l'ouvrage de C.C. Aggarwal intitulé « Neural networks and deep learning » publié chez Springer, édition 2018. On rappelle que la méthode de rétropropagation du gradient permet de calculer le gradient de l'erreur pour chaque neurone d'un réseau de neurones, de la dernière couche vers la première. Plus précisément, les différences entre les sorties du réseau et les étiquettes (ou labels) correspondantes forment des erreurs qui sont corrigées via la rétropropagation, les poids synaptiques du réseau de neurones étant alors changés en partant de la dernière couche et en remontant vers la première. Lorsque cette rétropropagation du gradient est effectuée de manière itérative, l'erreur tend à diminuer et le réseau offre une meilleure prédiction.

Après apprentissage, le réseau de neurones peut ensuite être utilisé dans une phase opérationnelle pour effectuer une prédiction sur de nouvelles données d'entrée.

Pendant sa phase opérationnelle, le réseau de neurones peut faire l'objet d'attaques, dites attaques antagonistes, dans lesquelles un tiers malveillant introduit des perturbations imperceptibles dans les données d'entrée dans le but d'induire des erreurs de prédiction. Ces données affectées de perturbations imperceptibles sont aussi dénommées exemples contradictoires (*adversarial examples*).

De manière générale, si l'on note $D^{tr} = \left\{ \left( \mathbf{x}_i^{tr}, \mathbf{y}_i^{tr} \right), i = 1, .., N \right\}$, $\mathbf{x}_i^{tr} \in \mathbb{R}^d$, $\mathbf{y}_i^{tr} \in \mathbb{R}^k$ l'ensemble des données intègres servant à l'apprentissage (*training data set*) où $d$ la dimension du vecteur de données d'entrée et $k$ la dimension du vecteur de sortie du réseau de neurones, des exemples contradictoires $\mathbf{x}_i^{adv}$ peuvent être générés au moyen d'une faible perturbation des données intègres, $\mathbf{x}_i^{tr}$, dans le but d'introduire une erreur de prédiction. Par exemple, si le réseau de neurones effectue une classification, l'exemple contradictoire pourra générer un faux positif (prédiction d'appartenance à une classe alors que la donnée intègre n'y appartient pas) ou bien un faux négatif (prédiction d'appartenance à une autre classe que celle à laquelle appartient la donnée intègre).

Différentes techniques ont été proposées dans l'art antérieur pour contrecarrer ces attaques antagonistes.

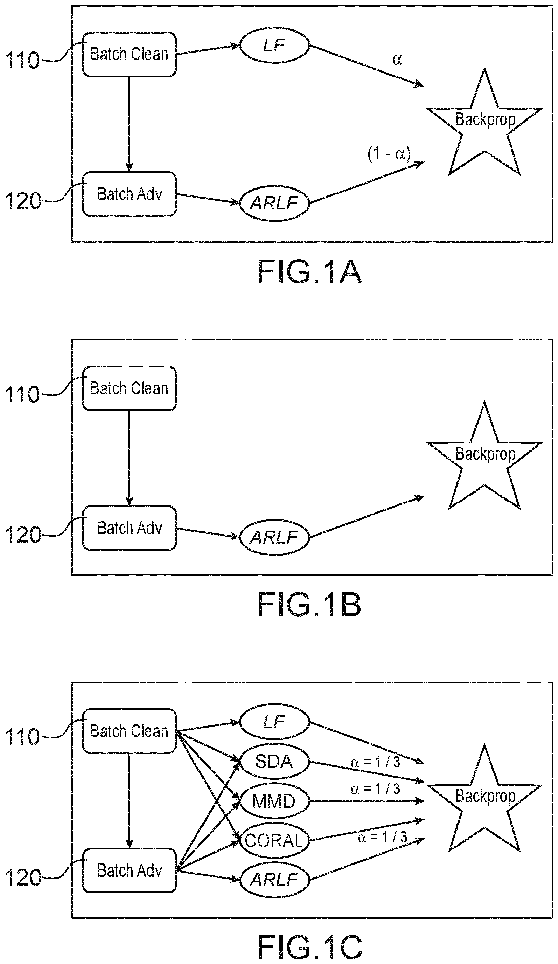

Une première approche, proposée dans l'article de I.J Goodfellow et al. intitulé « Explaining and harnessing adversarial examples » publié dans Proc. of International Conférence on Learning Représentations (ICLR), 2014 a été schématiquement représentée en Fig. 1A. Selon cette approche, le réseau de neurones est entraîné à la fois sur un ensemble, 110, de données d'apprentissage intègres, et sur un ensemble, 120, d'exemples contradictoires générés à l'aide d'une méthode dite FGSM (*Fast Gradient Signed Method*) ajoutant une perturbation des données dans le sens du gradient.

Plus précisément, l'apprentissage fait intervenir une fonction de perte (*loss function*) qui est la combinaison, $\alpha LF + (1-\alpha) ARLF$ d'une fonction de perte classique, *LF*, et d'une fonction de perte régularisée par une fonction intervenant dans la génération des exemples contradictoires, *ARLF* . Le gradient rétro-propagé dans les couches du réseau de neurones est celui calculé à partir de la fonction de perte combinée, $\alpha LF + (1-\alpha) ARLF$.

Une seconde approche a été proposée dans l'article de A. Madry et al. intitulé « Towards deep learning models resistant to adversarial attacks » publié dans Proc. of International Conférence on Learning Représentations (ICLR), 2018.

Selon cette approche, représentée en Fig. 1B, le réseau de neurones n'est pas entraîné sur l'ensemble des données d'apprentissage intègres mais sur un ensemble de données perturbées (exemples contradictoires) dans le but de rendre le réseau moins sensible à ces perturbations.

Enfin, plus récemment, une troisième approche a été proposée dans l'article de C. Song et al. intitulé « Improving the generalization of adversial training with domain adaptation » publié dans Proc. of International Conférence on Learning Représentations (ICLR), 2019.

Selon cette approche, représentée en Fig. 1C, le réseau de neurones est entraîné comme précédemment sur l'ensemble des données d'apprentissage intègres ainsi que sur les exemples contradictoires mais fait intervenir dans la fonction de perte un terme de régularisation visant à effectuer une adaptation de domaine (supervisée et non supervisée) de manière à réduire l'écart entre les représentations associées aux données intègres et celles associées aux données perturbées par attaque FGSM. Cet espace de représentation correspond à la sortie de l'avant-dernière couche du réseau de neurones. Ainsi, par exemple, lorsque le réseau de neurones effectue une classification, l'espace de représentation est celui en sortie de l'avant dernière couche avant l'application du modèle logit (régression logistique binaire ou polytomique).

Dans la Fig. 1C, interviennent un terme de régularisation de la fonction de perte, associé à l'adaptation de domaine supervisée SDA (Supervised Domain Adaptation) et deux termes de régularisation associés à l'adaptation non supervisée, à savoir MMD (Maximum Mean Discrepancy) et CORAL (CORelation ALignement).

Les termes de régularisation associés à l'adaptation de domaine non supervisée visent à aligner certains moments statistiques des distributions des données intègres avec les moments correspondants des distributions des données perturbées. Ainsi, le terme MMD exprime l'écart entre les moyennes et le terme CORAL exprime l'écart entre les covariances de ces deux distributions.

En pratique ces termes de régularisation sont insuffisants pour aligner les deux distributions en question. En outre, le gradient de la fonction de perte ainsi régularisée peut disparaître ou au contraire exploser en certains points de ces distributions ce qui conduit à une instabilité et, le cas échéant, à un échec de la phase d'apprentissage.

L'objet de la présente invention est par conséquent de proposer une méthode d'apprentissage d'un réseau de neurones qui permette de le rendre plus robuste aux attaques par exemples contradictoires que celles connues de l'art antérieur et ne souffre pas des problèmes d'instabilité précités.

## EXPOSÉ DE L'INVENTION

La présente invention est définie par une méthode d'apprentissage d'un réseau de neurones artificiels destiné à être entrainé sur un ensemble d'exemples intègres, labellisés par leurs labels correspondants, dans laquelle on génère au moyen d'au moins une attaque un ensemble d'exemples contradictoires labellisés, un exemple contradictoire étant obtenu par perturbation d'un exemple intègre et portant le même label que ce dernier, le réseau de neurones projetant un vecteur de données d'entrée de dimension $d$ dans un espace de représentation de dimension $k << d$ et fournissant, sous la forme d'un vecteur de sortie, une prédiction à partir du vecteur de données d'entrée ainsi projeté, le réseau de neurones artificiels étant entraîné sur ledit ensemble d'exemples contradictoires, ladite méthode étant originale en ce que cet entrainement est réalisé par rétropropagation du gradient à partir d'une fonction de perte régularisée, ladite fonction de perte régularisée comprenant un terme de pénalisation proportionnel à la divergence de Sinkhorn entre la distribution des exemples contradictoires et la distribution des exemples intègres, dans ledit espace de représentation.

Avantageusement, l'apprentissage est effectué en une pluralité d'époques, chaque époque comprenant une pluralité d'itérations d'entrainement, chaque itération d'entrainement étant effectuée sur un mini-lot d'exemples contradictoires, obtenu à partir d'un mini-lot d'exemples intègres correspondants, extraits dudit ensemble d'exemples intègres.

Chaque époque peut comprendre également une pluralité d'itérations d'entrainement sur des mini-lots d'exemples intègres, extraits dudit ensemble d'exemples intègres.

La fonction de perte régularisée est alors calculée sur le mini-lot d'exemples contradictoires, en combinant la valeur moyenne de la fonction de perte sur ce mini-lot, ( $L\left(D_b^{adv}\right)$ ) avec la divergence de Sinkhorn

( $S_{p,\sigma^{(k)}}\left(\Phi\left(D_b^{tr}\right), \Phi\left(D_b^{adv}\right)\right)$ ) entre la distribution des exemples contradictoires de ce mini-lot et celle des exemples intègres correspondants.

La fonction de perte est avantageusement calculée pour chaque exemple contradictoire du mini-lot à partir de l'écart entre la prédiction du réseau de neurones artificiels pour cet exemple contradictoire et le label de ce dernier.

La divergence de Sinkhorn est typiquement calculée comme

$$S_{p,\sigma}\left(\alpha,\beta\right) = W_{p,\sigma}\left(\alpha,\beta\right) - \frac{1}{2}W_{p,\sigma}\left(\alpha,\alpha\right) - \frac{1}{2}W_{p,\sigma}\left(\beta,\beta\right)$$

où $\alpha = \Phi\left(D_b^{adv}\right)$ est la distribution des représentations des exemples contradictoires du mini-lot $D_b^{adv}$ dans l'espace de représentation, et $\beta = \Phi\left(D_b^{tr}\right)$ est la distribution des représentations des exemples intègres du mini-lot $D_b^{tr}$ dans l'espace de représentation, et $W_{p,\sigma}(\alpha,\beta)$ est la distance de Wasserstein d'ordre *p* où *p* est un entier positif, régularisée par un terme d'entropie :

$$W_{p,\sigma}\left(\alpha,\beta\right) = \min_{\pi \in \Pi(\alpha,\beta)} \int_{\Omega \times \Omega} \|u-v\|^p d\pi(u,v) + \sigma KL\left(\pi \big| \alpha \otimes \beta\right)$$

$KL(\pi_1|\pi_2)$ étant la divergence de Kullback-Leibler entre les distributions de probabilité $\pi_1$ et $\pi_2$, $\Pi(\alpha,\beta)$ étant l'ensemble des distributions sur un espace probabilisé $\Omega \times \Omega$ dont les distributions marginales selon la première et la seconde dimension sont respectivement $\alpha$ et $\beta$, $\alpha \otimes \beta$ étant la distribution de probabilité produit de $\alpha$ et $\beta$, et $\sigma > 0$ étant un paramètre, dit paramètre de régularisation entropique.

Selon un exemple de réalisation, *p* = 2.

Selon une variante de réalisation, le paramètre de régularisation entropique est mis à jour à chaque itération d'entrainement en calculant la dérivée partielle de la divergence de Sinkhorn $S_{p,\sigma}\left(\Phi\left(D_b^{tr}\right), \Phi\left(D_b^{adv}\right)\right)$ par rapport à $\sigma$ et en la moyennant sur les exemples du mini-lot $D_b^{tr}$, la nouvelle valeur du paramètre de régularisation entropique étant calculée par descente de gradient.

Les exemples contradictoires pourront par exemple être générés par perturbation des exemples intègres au moyen de la méthode PGD, PGD, FGSM, ou BIM.

## BRÈVE DESCRIPTION DES DESSINS

D'autres caractéristiques et avantages de l'invention apparaîtront à la lecture de modes de réalisation de l'invention, décrits en référence aux figures jointes.

La Fig. 1A représente de manière schématique une première méthode d'apprentissage de l'état de la technique permettant d'accroître la robustesse d'un réseau de neurones à des attaques par exemples contradictoires ;

La Fig. 1B représente de manière schématique une deuxième méthode d'apprentissage de l'état de la technique permettant d'accroître la robustesse d'un réseau de neurones à des attaques par exemples contradictoires ;

La Fig. 1C représente de manière schématique une troisième méthode d'apprentissage de l'état de la technique permettant d'accroître la robustesse d'un réseau de neurones à des attaques par exemples contradictoires ;

La Fig. 2 représente de manière schématique une méthode d'apprentissage selon un mode de réalisation de la présente invention, permettant d'accroître la robustesse d'un réseau de neurones à des attaques par exemples contradictoires ;

La Fig. 3 représente de manière schématique l'ordinogramme d'une méthode de d'apprentissage d'un réseau de neurones, selon un mode de réalisation de la présente invention.

## EXPOSÉ DÉTAILLÉ DE MODES DE RÉALISATION PARTICULIERS

Nous considérerons dans la suite un réseau de neurones artificiels destiné à effectuer une prédiction dans une phase opérationnelle. Cette prédiction peut notamment être une opération de régression, une opération de classification, voire une génération de représentation sous forme de caractéristiques (*features*), comme rappelé dans la partie introductrice. Le réseau de neurones artificiels pourra être implémenté au moyen d'un logiciel exécuté par un ordinateur, le cas échéant possédant une architecture parallèle particulière (GPU voire équipé d'un accélérateur hardware. Alternativement, le circuit de neurones arficiels pourra être implémenté au moyen d'un circuit dédié.

Sans perte de généralité, et dans un but de simplification de la présentation nous supposerons tout d'abord que le réseau de neurones effectue une opération de classification parmi une pluralité *k* de classes possibles.

Plus précisément, on notera $\mathbf{X} \in \mathbb{R}^d$ un vecteur d'entrée et $y \in [0,1]^k$ le vecteur de sortie correspondant, donnant la distribution de probabilité de x parmi les *k* classes possibles. Le vecteur de sortie est typiquement obtenu au moyen de la fonction softmax, à savoir $\mathbf{y} = \text{softmax}(\varphi(\mathbf{x}))$ où $\varphi(\mathbf{x})$ est la représentation de x dans l'espace des logits, disponible en sortie de l'avant-dernière couche du réseau de neurones.

Les données d'entrée seront typiquement des données d'images, voire des données vidéo. Dans le cas d'images en couleur, la dimension d du vecteur d'entrée sera égale à $H \times W \times C$ où $H$ et $W$ sont respectivement la hauteur et la largeur des images exprimées en nombre de pixels et $C$ est le nombre de canaux de couleur.

De manière plus générale, nous noterons $\varphi(\mathbf{x})$ un vecteur de dimension réduite $k << d$ représentant x dans l'espace des caractéristiques (ou *features*) sur la base de laquelle le réseau de neurones effectue la prédiction. L'espace de représentation est quelquefois désigné par le terme « *embedding space* » ou « *space offeatures* » dans la littérature anglo-saxonne. Le réseau de neurones peut être modélisé par une fonction $F=f \circ \varphi$ où $\mathbf{y}=f \circ \varphi(\mathbf{x})$ est le vecteur de sortie du réseau, et $f$ est une fonction de prédiction à partir de l'espace de représentation.

Dans le cas de données d'images mentionné précédemment, la fonction $\varphi$ (encore dénommée fonction de projection) pourra être une fonction représentative d'un réseau de neurones de type « feed-forward », et plus particulièrement d'un réseau de neurones convolutifs (ou CNN), de manière connue en soi. Alternativement, elle pourra être une fonction représentative d'un transformeur utilisant un mécanisme d'auto-attention (*self attention*). Les transformeurs ont été initialement développés pour le traitement en langage naturel mais ont plus récemment été proposés dans le domaine de la vision par ordinateur comme décrit dans l'article de A ; Dosovitskiy et al. Intitulé « An image is worth 16x16 words : transformers for image recognition at scale", Proc. Of ICLR 2021, 3 juin 2021.

L'opération de classification pourra notamment être destinée à la vérification d'identité ou à la reconnaissance d'un objet ou d'une personne dans une image (par exemple dans une application de reconnaissance faciale). Alternativement elle pourra être utilisée pour associer une catégorie à une image parmi une pluralité de catégories prédéterminées. Alternativement encore, elle pourra permettre de rechercher dans une base de données des images similaires à une image requêtée. D'autres applications pourront être envisagées par l'homme du métier sans pour autant sortir du cadre de la présente invention.

L'idée à la base de l'invention est d'effectuer un rapprochement des domaines de représentation des exemples intègres et des exemples contradictoires au moyen de la théorie du transport optimal. Plus précisément, les coefficients du réseau de neurones sont adaptés par rétropropagation lors de la phase d'apprentissage, de manière à ce que la distribution des exemples contradictoires et celle des exemples intègres soient proches au sens d'une certaine distance dans l'espace de représentation. Le rapprochement de ces distributions dans l'espace de représentation est obtenu en ajoutant à la fonction de perte un terme de régularisation (ici de pénalisation) proportionnel à la divergence de Sinkhorn entre ces distributions. L'alignement des distributions elles-mêmes, et pas seulement celui des moments de ces distributions, comme préconisé dans l'art antérieur, permet une stabilisation de l'apprentissage en évitant une disparition ou une explosion de certains gradients.

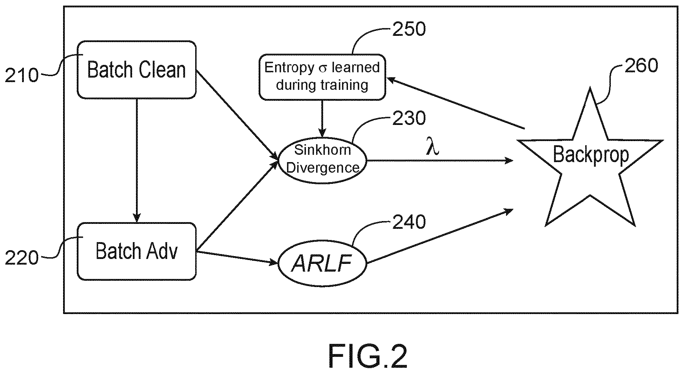

La Fig. 2 représente de manière schématique une méthode d'apprentissage d'un réseau de neurones selon un mode de réalisation de la présente invention.

Comme précédemment, on a représenté en 210 un ensemble d'exemples intègres, typiquement des images, et en 220, un ensemble d'exemples contradictoires, obtenus par perturbation de ces derniers, par exemple au moyen d'une méthode d'attaque antagoniste comme la méthode FGSM (décrite dans l'article de Goodfellow précité), la méthode PGD (*Projected Gradient Descent,* décrite l'article de Madry précité) voire la méthode BIM (*Basic Iterative Method*) publiée dans l'article de A. Kurakin et al. intitulé « Adversarial machine learning at scale », Proc. of ICLR 2017, pp. 1-17.

L'apprentissage du réseau de neurones est réalisé ici à partir de l'ensemble des exemples contradictoires. Plus précisément, si l'on note $\mathbf{x}_i^{adv}$ un exemple contradictoire obtenu au moyen d'une faible perturbation d'un exemple intègre $\mathbf{x}_i^{tr}$, l'apprentissage se fait de manière supervisée sur l'ensemble des données labellisées $D^{adv} = \left\{ \left( \mathbf{x}_i^{adv}, \mathbf{y}_i^{tr} \right), i=1,..,N \right\}$. Cet apprentissage est réalisé par rétropropagation du gradient à partir d'une fonction de perte.

De manière originale, la fonction de perte comprend un terme, représenté en 240, correspondant à la tâche de prédiction à effectuer (classification, régression par exemple) ainsi qu'un terme de régularisation, 230, fonction croissante de la divergence de Sinkhorn entre la distribution des exemples intègres et celle des exemples contradictoires dans l'espace de représentation. Selon un exemple de réalisation, le terme de régularisation est proportionnel à la divergence de Sinkhorn entre lesdites distributions.

On rappelle que la divergence de Sinkhorn entre deux distributions de probabilité $\alpha, \beta$ sur un espace probabilisé $\Omega$ est définie par :

$$S_{p,\sigma}(\alpha, \beta) = W_{p,\sigma}(\alpha, \beta) - \frac{1}{2} W_{p,\sigma}(\alpha, \alpha) - \frac{1}{2} W_{p,\sigma}(\beta, \beta) \qquad (1)$$

où $W_{p,\sigma}(\alpha,\beta)$ est la distance de Wasserstein d'ordre $p$ (entier positif) régularisée par un terme d'entropie :

$$W_{p,\sigma}\left(\alpha,\beta\right) = \min_{\pi \in \Pi(\alpha,\beta)} \int_{\Omega \times \Omega} \left\| u - v \right\|^p d\pi(u,v) + \sigma KL\left(\pi \left| \alpha \otimes \beta\right.\right) \qquad (2)$$

où $KL(\pi_1|\pi_2)$ est la divergence de Kullback-Leibler (ou entropie relative) entre les distributions de probabilité $\pi_1$ et $\pi_2$, $\Pi(\alpha,\beta)$ est l'ensemble des distributions sur l'espace probabilisé $\Omega \times \Omega$ dont les distributions marginales selon la première et la seconde dimension sont respectivement $\alpha$ et $\beta$, $\alpha \otimes \beta$ est la distribution de probabilité produit de $\alpha$ et $\beta$, et $\sigma > 0$ est un paramètre entropique de régularisation.

Le premier terme intervenant dans l'expression (2) peut être considéré comme une métrique de transport optimal entre les distributions de probabilité $\alpha$ et $\beta$ avec un coût de transport égal à $||u\text{-}v||^p$, le second terme étant un terme de régularisation entropique assurant une certaine uniformité du transport.

On pourra trouver une présentation de la divergence de Sinkhorn dans l'article de A. Genevay et al. intitulé « Learning generative models with Sinkhorn divergences », Proceedings of the 21st Int'l Conf. on Artificial Intelligence and Statistics (AISTATS), Lanzarote, 2018.

En définitive, la fonction de perte régularisée utilisée en 260 pour la rétropropagation du gradient lors de la phase d'apprentissage $D^{adv} = \left\{\left(\mathbf{x}_i^{adv}, \mathbf{y}_i^{tr}\right), i = 1,..N\right\}$ est donnée par :

$$L_{SAT,\sigma}\left(D^{tr}, D^{adv}, f, \varphi\right) = L\left(D^{adv}\right) + \lambda S_{p,\sigma}\left(\Phi\left(D^{adv}\right), \Phi\left(D^{tr}\right)\right) \qquad (3)$$

où $L_{SAT,\sigma}(D^{tr}, D^{adv}, f, \varphi)$ est la fonction de perte régularisée au sens de la présente invention (SAT étant l'acronyme de Sinkhorn Adversarial Training), $L\left(D^{adv}\right) = \underset{(x,y) \in D^{adv}}{mean}\; \ell\left(f \circ \varphi(x), y\right)$ étant la fonction de perte relative à la tâche de prédiction du réseau de neurones sur l'ensemble $D^{adv}$ (par exemple dans une tâche de classification, cette fonction de perte pourra être classiquement une entropie croisée), $\ell(.,.)$ est la fonction de perte calculée pour une prédiction $f \circ \varphi(x)$, $\underset{(x,y) \in D^{adv}}{mean}$ signifiant la moyenne prise sur l'ensemble des couples de $D^{adv}$, $\Phi(D^{tr})$ et $\Phi(D^{adv})$ sont respectivement les distributions de probabilité des représentations $\varphi(\mathbf{x}^{tr})$ et $\varphi(\mathbf{x}^{adv})$ des exemples intègres et des exemples contradictoires, et $\lambda$ est un coefficient strictement positif, par exemple égal à 1. De préférence, on choisira $p = 2$, autrement dit on optera pour une distance de Wasserstein quadratique dans le calcul de la divergence de Sinkhorn.

Le paramètre entropique de régularisation, $\sigma$, est un hyperparamètre qui pourra être appris en 250, lors de la phase d'apprentissage, à partir des coefficients synaptiques mis à jour par l'algorithme de rétropropagation. Il pourra être mis à jour après chaque rétropropagation comme expliqué plus loin.

La mise à jour du gradient pourra être effectuée de manière itérative selon une méthode de descente de gradient stochastique moyennée sur des mini-lots (*mini-batches*) extraits de l'ensemble d'apprentissage $D^{tr}$, de manière connue en soi.

A la différence de la méthode d'apprentissage de la Fig. 1C, l'apprentissage du réseau de neurones pourra être avantageusement limité au seul ensemble des exemples contradictoires (labellisés), comme représenté en Fig. 2. Selon une variante, l'apprentissage pourra toutefois être étendu à l'ensemble des exemples intègres (labellisés) ou encore à un sous-ensemble de ce dernier. Selon un mode particulier de réalisation (non représenté), on pourra alterner des itérations de mise à jour du gradient sur la base de l'ensemble des exemples intègres et des itérations de mise à jour du gradient sur la base de l'ensemble des exemples contradictoires.

Comme précédemment indiqué, la méthode d'apprentissage représentée permet d'éviter une disparition ou une explosion du gradient de la fonction de perte et donc assure une meilleure stabilité du processus itératif.

En outre, la contrainte induite par la régularisation permet de rapprocher de manière plus uniforme les distributions des exemples intègres et des exemples contradictoires dans l'espace de représentation, ce qui conduit à une plus grande robustesse du réseau entraîné à l'encontre des attaques par exemples contradictoires.

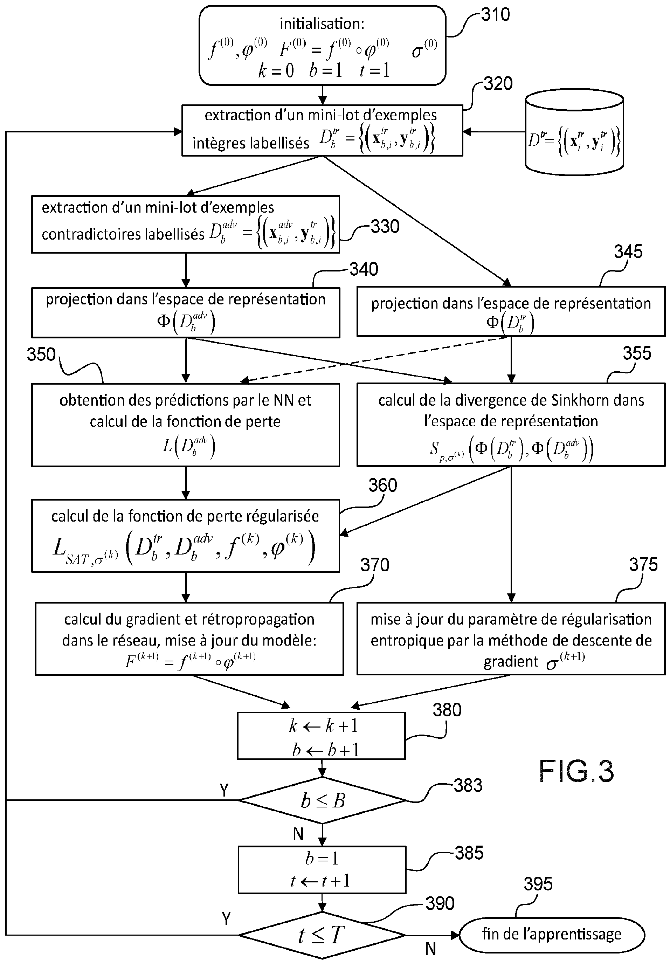

La Fig. 3 représente de manière schématique l'ordinogramme d'une méthode d'apprentissage d'un réseau de neurones artificiels selon un mode de réalisation de la présente invention.

La méthode d'apprentissage commence par une étape d'initialisation, 310, dans laquelle on initialise le modèle du réseau de neurones, celui-ci étant défini par une fonction F dont les paramètres sont les coefficients synaptiques du réseau. Comme précédemment indiqué la fonction F peut se décomposer en une projection $\varphi$ sur un espace de représentation de dimension sensiblement inférieure à la dimension des vecteurs d'entrée du réseau et une fonction de prédiction $f$ fournissant les vecteurs de sortie à partir des vecteurs d'entrée projetés dans l'espace de représentation, soit $F = f \circ \varphi$.

La méthode d'apprentissage étant itérative, chaque itération comprenant une rétropropagation du gradient de la fonction de perte dans le réseau et par conséquent une mise à jour des coefficients synaptiques, on notera $F^{(k)}, \varphi^{(k)}$ et $f^{(k)}$ les fonctions F , $\varphi$ et $f$ du modèle à l'itération $k$ .

L'étape d'initialisation définit par conséquent des fonctions $F^{(0)}, \varphi^{(0)}$ et $f^{(0)}$. Elle initialise également le paramètre de régularisation entropique $\sigma$ intervenant dans la divergence de Sinkhorn à une valeur $\sigma^{(0)}$ prédéterminée.

L'indice $k$ des itérations est initialisé 0, celui $b$ des mini-lots est initialisé à 1 et enfin celui, t, des époques à 1.

Le cas échéant l'amplitude maximale $\varepsilon$ de la perturbation pouvant affecter les exemples intègres est initialisée à une valeur prédéterminée.

L'apprentissage est divisé en T époques, chaque époque comprenant un entraînement sur $B$ mini-lots.

A l'étape 320, on extrait de l'ensemble des exemples intègres labellisés, typiquement des images labellisées,

$$D^{tr} = \left\{ \left( \mathbf{x}_i^{tr}, \mathbf{y}_i^{tr} \right) \right\}$$ constitué de $B$ mini-lots, le b-ième mini-lot étant noté $$D_b^{tr} \subset D^{tr}$$ . On pourra choisir les mini-lots de manière à ce qu'ils constituent une partition de l'ensemble d'apprentissage.

A partir des exemples intègres du b-ième mini-lot $D_b^{tr}$ , on génère en 330 des exemples contradictoires, en fonction du type d'attaque A envisagé. Par exemple, on pourra perturber les exemples intègres au moyen de la méthode FGSM, avec une amplitude maximale de perturbation inférieure ou égale à $\varepsilon$ en valeur absolue. Alternativement, on pourra utiliser les méthodes PGD ou BIM précitées. Dans tous les cas, on note conventionnellement

$$D_b^{adv} = \left\{ \left( \mathbf{x}_{b,i}^{adv}, \mathbf{y}_{b,i}^{tr} \right) \right\}$$ les exemples contradictoires labellisés du mini-lot ainsi obtenu.

Alternativement, on peut avoir préalablement généré un ensemble $$D^{adv} = \left\{ \left( \mathbf{x}_i^{adv}, \mathbf{y}_i^{tr} \right) \right\}$$ d'exemples contradictoires labellisés, associé à l'ensemble $$D^{tr} = \left\{ \left( \mathbf{x}_i^{tr}, \mathbf{y}_i^{tr} \right) \right\}$$ et extraire ensuite des mini-lots correspondants $$D_b^{tr} = \left\{ \left( \mathbf{x}_{b,i}^{tr}, \mathbf{y}_{b,i}^{tr} \right) \right\} \quad D_b^{adv} = \left\{ \left( \mathbf{x}_{b,i}^{adv}, \mathbf{y}_{b,i}^{tr} \right) \right\}$$ respectivement de $D^{tr}$ et $D^{adv}$ .

A l'étape 340, on effectue la projection des exemples contradictoires du mini-lot $D_b^{adv}$ dans l'espace de représentation, au moyen de la fonction de projection $\varphi^{(k)}$ (opération dite aussi « forward »). De manière similaire, on effectue en 345 la projection des exemples intègres du mini-lot $D_b^{tr}$ dans l'espace de représentation au moyen de cette même fonction de projection.

A l'étape 350, on obtient les prédictions issues des exemples contradictoires du mini-lot $D_b^{adv}$ , par exemple en appliquant la fonction de prédiction $f^{(k)}$ aux exemples contradictoires projetés à l'étape 340 dans l'espace de représentation. On en déduit la valeur moyenne de la fonction de perte sur les exemples du mini-lot $D_b^{adv}$ , soit

$$L\left( D_b^{adv} \right) = \underset{(x,y) \in D_b^{adv}}{mean} \left( \ell \left( F^k(x), y \right) \right).$$

A l'étape 355, on calcule la divergence de Sinkhorn entre les distributions $\Phi\left( D_b^{tr} \right)$ et $\Phi\left( D_b^{adv} \right)$ des exemples intègres du mini-lot $D_b^{tr}$ et des exemples contradictoires du mini-lot $D_b^{adv}$ dans l'espace de représentation, tels que calculés aux étapes 345 et 340 respectivement. La valeur de la divergence de Sinkhorn sur ces mini-lots est notée $$S_{p,\sigma^{(k)}}\left( \Phi\left( D_b^{tr} \right), \Phi\left( D_b^{adv} \right) \right)$$ , où $\sigma^{(k)}$ est la valeur du paramètre de régularisation entropique à l'itération $k$ .

A l'étape 360, on combine la valeur moyenne prise par la fonction de perte sur le mini-lot $D_b^{adv}$ , soit $L\left( D_b^{adv} \right)$, précédemment calculée en 350, avec celle de la divergence de Sinkhorn, $S_{p,\sigma^{(k)}}\left(\Phi\left(D_b^{tr}\right),\Phi\left(D_b^{adv}\right)\right)$, calculée en 355, pour obtenir la valeur de la fonction de perte régularisée, $L_{SAT,\sigma^{(k)}}\left(D_b^{tr},D_b^{adv},f^{(k)},\varphi^{(k)}\right)$ comme indiqué

dans l'expression (3), le calcul étant effectué pour le b-ième mini-lot $D_b^{adv}$

On calcule ensuite le gradient de la fonction de perte régularisée en 370 et on effectue une rétropropagation du gradient de couche en couche pour mettre à jour les coefficients synaptiques. Les poids synaptiques sont mis à jour par descente de gradient. On obtient ainsi une nouvelle fonction de projection $\varphi^{(k+1)}$, une nouvelle fonction de prédiction $f^{(k+1)}$ et un nouveau modèle défini par $F^{(k+1)} = f^{(k+1)} \circ \varphi^{(k+1)}$.

En parallèle, on calcule en 375 la dérivée partielle de la divergence de Sinkhorn $S_{p,\sigma^{(k)}}\left(\Phi\left(D_b^{tr}\right),\Phi\left(D_b^{adv}\right)\right)$ par rapport à σ pour la valeur $\sigma^{(k)}$. La dérivée partielle est moyennée sur les exemples du mini-lot. On en déduit ensuite, par descente de gradient, la nouvelle valeur $\sigma^{(k+1)}$ du paramètre de régularisation entropique (en fait un hyperparamètre). Le paramètre de régularisation entropique est ainsi mis à jour à chaque itération d'entraînement, c'est-à-dire à chaque nouveau mini-lot d'exemples intègres considéré. Cette mise à jour vise à minimiser la divergence de Sinkhorn sur le mini-lot d'exemples contradictoires et le mini-lot d'exemples intègres correspondant, toutes choses étant égales par ailleurs.

On peut alors incrémenter en 380 le numéro d'itération k ainsi que l'indice b du mini-lot.

Si $b \leq B$, autrement dit si l'on n'a pas encore épuisé tous les mini-lots de l'ensemble $D^{tr}$, on retourne à l'étape 320 pour une nouvelle extraction de mini-lot. Dans la négative, en revanche, on réinitialise en 385 l'indice de mini-lot, b=1, et on incrémente l'indice d'époque, $t \leftarrow t+1$.

On vérifie en 390 si l'indice d'époque est égal à une valeur maximale T prédéterminée. Dans la négative, on retourne à l'étape 320 pour l'extraction d'un nouveau mini-lot. En revanche, dans l'affirmative, on considère que l'apprentissage est terminé en 395. Le réseau de neurones ainsi entraîné est alors robuste aux attaques par exemples contradictoires.

Comme indiqué précédemment, on pourra alterner des itérations d'entrainement sur l'ensemble des exemples contradictoires et des itérations d'entrainement sur l'ensemble des exemples intègres. Dans ce cas, lorsqu'une itération est effectuée sur l'ensemble des exemples intègres, l'étape 350 effectue des prédictions issues des exemples du mini-lot $D_b^{tr}$, par exemple en appliquant la fonction de prédiction $f^{(k)}$ aux exemples intègres projetés à l'étape 345 dans l'espace de représentation (cf. flèche en trait discontinu). On en déduit ensuite la valeur prise par la fonction de perte sur chaque exemple du mini-lot $D_b^{tr}$ et on calcule la moyenne de ces valeurs sur les exemples du mini-mot pour obtenir une valeur $L\left(D_b^{tr}\right)$ qui est combinée avec celle de la divergence de Sinkhorn calculée à l'étape 355. Le reste de l'itération est identique à ce qui a été précédemment décrit.

Cette alternance d'itérations permet, si besoin, d'améliorer la qualité de la prédiction du réseau lorsque les entrées ne font pas l'objet d'attaques par exemples contradictoires.

**Revendications**

1. Méthode d'apprentissage d'un réseau de neurones artificiels destiné à être entrainé sur un ensemble d'exemples intègres constitués d'images, lesdits exemples étant labellisés par leurs labels correspondants, dans laquelle on génère au moyen d'au moins une attaque un ensemble d'exemples contradictoires labellisés, un exemple contradictoire étant obtenu par perturbation d'un exemple intègre et portant le même label que ce dernier, le réseau de neurones projetant un vecteur de données d'entrée de dimension d dans un espace de représentation de dimension k << d et fournissant, sous la forme d'un vecteur de sortie, une prédiction à partir du vecteur de données d'entrée ainsi projeté, le réseau de neurones artificiels étant entraîné sur ledit ensemble d'exemples contradictoires, **caractérisée en ce que** cet entrainement est réalisé par rétropropagation du gradient à partir d'une fonction de perte régularisée, ladite fonction de perte régularisée comprenant un terme de pénalisation proportionnel à la divergence de Sinkhorn entre la distribution des exemples contradictoires et la distribution des exemples intègres dans ledit espace de représentation, l'apprentissage étant effectué en une pluralité d'époques, chaque époque comprenant une pluralité d'itérations d'entrainement, chaque itération d'entrainement étant effectuée sur un mini-lot d'exemples contradictoires, obtenu à partir d'un mini-lot d'exemples intègres correspondants, extraits dudit ensemble d'exemples intègres, ladite divergence de Sinkhorn comportant un terme d'entropie pondérée par un paramètre de régularisation entropique, ledit paramètre entropique étant mis à jour à chaque itération d'entrainement de manière à minimiser ladite divergence sur le mini-lot d'exemples contradictoires et le mini-lot d'exemples intègres correspondant.

2. Méthode d'apprentissage d'un réseau de neurones artificiels selon la revendication 2, **caractérisée en ce que** chaque époque comprend également une pluralité d'itérations d'entrainement sur des mini-lots d'exemples intègres, extraits dudit ensemble d'exemples intègres.

3. Méthode d'apprentissage d'un réseau de neurones artificiels selon la revendication 2, **caractérisée en ce que** la fonction de perte régularisée est calculée sur le mini-lot d'exemples contradictoires, en combinant la valeur moyenne de la fonction de perte sur ce mini-lot, $\left( L\left( D_b^{adv} \right) \right)$ avec la divergence de Sinkhorn $\left( S_{p,\sigma^{(k)}}\left( \Phi\left( D_b^{tr} \right), \Phi\left( D_b^{adv} \right) \right) \right)$ entre la distribution des exemples contradictoires de ce mini-lot et celle des exemples intègres correspondants.

4. Méthode d'apprentissage d'un réseau de neurones artificiels selon la revendication 4, **caractérisée en ce que** la fonction de perte est calculée pour chaque exemple contradictoire du mini-lot à partir de l'écart entre la prédiction du réseau de neurones artificiels pour cet exemple contradictoire et le label de ce dernier.

5. Méthode d'apprentissage d'un réseau de neurones artificiels selon la revendication 4 ou 5, **caractérisée en ce que** la divergence de Sinkhorn est calculée comme $S_{p,\sigma}\left( \alpha, \beta \right) = W_{p,\sigma}\left( \alpha, \beta \right) - \frac{1}{2} W_{p,\sigma}\left( \alpha, \alpha \right) - \frac{1}{2} W_{p,\sigma}\left( \beta, \beta \right)$ où $\alpha = \Phi\left( D_b^{adv} \right)$ est la distribution des représentations des exemples contradictoires du mini-lot $D_b^{adv}$ dans l'espace de représentation, et $\beta = \Phi\left( D_b^{tr} \right)$ est la distribution des représentations des exemples intègres du mini-lot $D_b^{tr}$ dans l'espace de représentation, et $W_{p,\sigma}(\alpha,\beta)$ est la distance de Wasserstein d'ordre $p$ où $p$ est un entier positif, régularisée par le terme d'entropie :

$$W_{p,\sigma}\left( \alpha, \beta \right) = \min_{\pi \in \Pi(\alpha,\beta)} \int_{\Omega \times \Omega} \left\| u - v \right\|^p d\pi(u,v) + \sigma KL\left( \pi \middle| \alpha \otimes \beta \right)$$

$KL(\pi_1|\pi_2)$ étant la divergence de Kullback-Leibler entre les distributions de probabilité $\pi_1$ et $\pi_2$, $\Pi(\alpha,\beta)$ étant l'ensemble des distributions sur un espace probabilisé $\Omega \times \Omega$ dont les distributions marginales selon la première et la seconde dimension sont respectivement $\alpha$ et $\beta$, $\alpha \otimes \beta$ étant la distribution de probabilité produit de $\alpha$ et $\beta$, et $\sigma > 0$ étant ledit paramètre de régularisation entropique.

6. Méthode d'apprentissage d'un réseau de neurones artificiels selon la revendication 6, **caractérisée en ce que** $p$ = 2.

7. Méthode d'apprentissage d'un réseau de neurones artificiels selon l'une des revendications précédentes, **caractérisée en ce que** en calculant la dérivée partielle de la divergence de Sinkhorn $S_{p,\sigma}\left( \Phi\left( D_b^{tr} \right), \Phi\left( D_b^{adv} \right) \right)$ par rapport à $\sigma$ et en la moyennant sur les exemples du mini-lot $D_b^{tr}$, la nouvelle valeur du paramètre de régularisation entropique étant calculée par descente de gradient.

8. Méthode d'apprentissage d'un réseau de neurones artificiels selon l'une des revendications précédentes, **caractérisée en ce que** les exemples contradictoires sont générés par perturbation des exemples intègres au moyen de la méthode PGD, FGSM, ou BIM.

FIG.1A

FIG.1B

FIG.1C

FIG.2

initialisation:
$$f^{(0)}, \varphi^{(0)} \quad F^{(0)} = f^{(0)} \circ \varphi^{(0)} \quad \sigma^{(0)}$$
$$k = 0 \quad b = 1 \quad t = 1$$

310

extraction d'un mini-lot d'exemples intègres labellisés $D_b^{tr} = \left\{ \left( \mathbf{x}_{b,i}^{tr}, \mathbf{y}_{b,i}^{tr} \right) \right\}$

320

$$D^{tr} = \left\{ \left( \mathbf{x}_i^{tr}, \mathbf{y}_i^{tr} \right) \right\}$$

extraction d'un mini-lot d'exemples contradictoires labellisés $D_b^{adv} = \left\{ \left( \mathbf{x}_{b,i}^{adv}, \mathbf{y}_{b,i}^{tr} \right) \right\}$

330

345

projection dans l'espace de représentation $\Phi\left( D_b^{adv} \right)$

340

projection dans l'espace de représentation $\Phi\left( D_b^{tr} \right)$

350

obtention des prédictions par le NN et calcul de la fonction de perte $L\left( D_b^{adv} \right)$

355

calcul de la divergence de Sinkhorn dans l'espace de représentation $S_{p,\sigma^{(k)}}\left( \Phi\left( D_b^{tr} \right), \Phi\left( D_b^{adv} \right) \right)$

360

calcul de la fonction de perte régularisée $L_{SAT,\sigma^{(k)}}\left( D_b^{tr}, D_b^{adv}, f^{(k)}, \varphi^{(k)} \right)$

370

calcul du gradient et rétropropagation dans le réseau, mise à jour du modèle: $F^{(k+1)} = f^{(k+1)} \circ \varphi^{(k+1)}$

375

mise à jour du paramètre de régularisation entropique par la méthode de descente de gradient $\sigma^{(k+1)}$

380

$$k \leftarrow k + 1$$
$$b \leftarrow b + 1$$

383

Y $\quad b \leq B$

N

385

$$b = 1$$
$$t \leftarrow t + 1$$

390

Y $\quad t \leq T$

N

395

fin de l'apprentissage

FIG.3

Europäisches
Patentamt

European
Patent Office

Office européen
des brevets

**RAPPORT DE RECHERCHE EUROPEENNE**

Numéro de la demande

**EP 21 21 0823**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Song Chuanbiao ET AL: "Improving the Generalization of Adversarial Training with Domain Adaptation", , 15 mars 2019 (2019-03-15), XP055831600, Extrait de l'Internet: URL:https://arxiv.org/pdf/1810.00740.pdf [extrait le 2021-08-11] | 1-3,8 | INV. G06N3/08 |
| A | * Sections 1, 2.1, 2.2, 3.1.1, 3.2, 4.1; Algorithm 1; Table 6. * ----- | 4-7 | |
| A | GIULIA LUISE ET AL: "Generalization Properties of Optimal Transport GANs with Latent Distribution Learning", ARXIV.ORG, CORNELL UNIVERSITY LIBRARY, 201 OLIN LIBRARY CORNELL UNIVERSITY ITHACA, NY 14853, 29 juillet 2020 (2020-07-29), XP081728813, * Section 4 * ----- | 1-8 | |
| A | GENG CONG ET AL: "Adversarial Text Image Super-Resolution using Sinkhorn Distance", ICASSP 2020 - 2020 IEEE INTERNATIONAL CONFERENCE ON ACOUSTICS, SPEECH AND SIGNAL PROCESSING (ICASSP), IEEE, 4 mai 2020 (2020-05-04), pages 2663-2667, XP033793987, DOI: 10.1109/ICASSP40776.2020.9054360 * Section 3.2; figure 1 * ----- | 1-8 | **DOMAINES TECHNIQUES RECHERCHES (IPC)** G06N |

Le présent rapport a été établi pour toutes les revendications

| Lieu de la recherche | Date d'achèvement de la recherche | Examinateur |
|---|---|---|
| La Haye | 30 mars 2022 | Szymanski, Francois |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **C.C. AGGARWAL.** Neural networks and deep learning. Springer, 2018
- **I.J GOODFELLOW et al.** Explaining and harnessing adversarial examples. *Proc. of International Conférence on Learning Représentations (ICLR),* 2014
- **A. MADRY et al.** Towards deep learning models resistant to adversarial attacks. *Proc. of International Conférence on Learning Représentations (ICLR),* 2018
- **C. SONG et al.** Improving the generalization of adversial training with domain adaptation. *Proc. of International Conférence on Learning Représentations (ICLR),* 2019
- **A ; DOSOVITSKIY et al.** An image is worth 16x16 words : transformers for image recognition at scale. *Proc. Of ICLR,* 03 Juin 2021
- **A. KURAKIN et al.** Adversarial machine learning at scale. *Proc. of ICLR,* 2017, 1-17
- **A. GENEVAY et al.** Learning generative models with Sinkhorn divergences. *Proceedings of the 21st Int'l Conf. on Artificial Intelligence and Statistics (AIST-ATS), Lanzarote,* 2018